# EUROPÄISCHE PATENTSCHRIFT

(11) **EP 1 273 638 B1**
(45) Veröffentlichungstag und Bekanntmachung des Hinweises auf die Patenterteilung: **06.09.2006**
(21) Anmeldenummer: 02013439.1
(22) Anmeldetag: 13.06.2002
(51) Int. Cl.: C09D 105/16, C09D 157/00, C09D 5/16

(54) **Beschichtungsmittel für verschmutzungsresistente Beschichtungen**
Coating agent for soil resistant coatings
Agent de revêtement pour les revêtements anti-salissures

(30) Priorität: 05.07.2001 DE 10132506
(43) Veröffentlichungstag der Anmeldung: 08.01.2003
(73) Patentinhaber: Wacker Polymer Systems GmbH & Co. KG, 84489 Burghausen (DE)
(72) Erfinder: Weitzel, Hans-Peter, Dr., 84571 Reischach (DE); Zeh, Harald, Dr., 84489 Burghausen (DE)
(74) Vertreter: Schuderer, Michael

(56) Entgegenhaltungen:
- EP-A- 0 186 146
- WO-A-97/46095
- DE-A- 19 520 989
- JP-A- 11 130 608
- JP-A- 2000 302 601

## Beschreibung

Die Erfindung betrifft lösungsmittelfrei herstellbare Beschichtungsmittel zur Herstellung verschmutzungsresistenter Beschichtungen, insbesondere Fassaden, sowie Verfahren zu deren Herstellung und deren Verwendung.

Als Bindemittel zur Herstellung von kunststoffmodifizierten Fassadenbeschichtungen oder Putzen werden in der Regel filmbildende Polymere in Dispersions- oder Pulverform eingesetzt. Diese Bindemittel erhöhen die mechanische Stabilität der Beschichtung und erhöhen die Nassabriebswerte. Nachteilig ist in vielen Fällen die durch die Kunststoffmodifizierung eingebrachte erhöhte Verschmutzungsneigung der Fassade.

Übliche Techniken zur Vermeidung oder zumindest Verringerung der Verschmutzungsneigung sind der Einsatz von härteren Polymeren mit höherer Tg. Dies bedingt jedoch den Einsatz von flüchtigen organischen Filmbildehilfsmittel und ist heutzutage aus ökologischer Sicht nicht mehr akzeptiert. Vielfach findet man auch den Einsatz von photochemisch vernetzbaren Bindemitteln. Diese zeigen jedoch den Nachteil, dass der schlecht in Wasser lösliche Photoinitiator nur mit Lösungsmitteln in die Zusammensetzung eingebracht werden kann.

Die DE-A 19918052 betrifft pigmenthaltige Beschichtungsmittel mit guter Nassabriebsfestigkeit und geringer Anschmutzneigung auf der Basis von (Meth)acrylat-Polymerisaten und einem geringen Anteil an nicht polymerisierbarem Photoinitiator. Aus der DE-A 4318083 sind Beschichtungsmittel auf Basis von (Meth)-acrylatcopolymerisaten bekannt, welche aufgrund eines Gemisches von hydrophilem und hydrophobem Photoinitiators eine erhöhte UV-Sensibilität aufweisen. Die US-A 3320198 beschreibt eine Vorgehensweise, bei der Beschichtungsmittel für Aussenfarben durch Zugabe einer Benzophenon-Lösung zu einem Acrylatlatex erhalten werden. Nachteilig ist dabei, dass mit dem wasserunlöslichen Photoinitiator immer Lösungsmittel in die Beschichtungsmittel-Zusammensetzung eingetragen werden. Die EP-A 599676 beschreibt UV-vernetzbare Beschichtungsmittel auf der Basis von Acrylatcopolymerisaten mit copolyerisierbarem Photoinitiator. Damit wird zwar der Eintrag von Lösungsmitteln in das Beschichtungsmittel vermieden, aber verbunden mit hohen Kosten für den polymersierbaren Photoinitiator.

Der Erfindung lag die Aufgabe zugrunde, ein Beschichtungsmittel zur Herstellung von verschmutzungsresistenten Fassaden zu entwickeln, welches die bekannten Nachteile des Standes der Technik behebt und zu weniger verschmutzungsanfälligen Fassaden führt.

Überraschenderweise wurde gefunden, dass durch den Einsatz von Photoinitiator und/oder Fungizid, jeweils in mit Cyclodextrin komplexierter Form, Beschichtungsmittel mit deutlich verbessertem Bewitterungsverhalten der damit gestrichenen oder verputzten Fassaden erhalten werden, wobei die Beschichtungsmittel ohne Zusatz von Lösungsmittel herstellbar sind.

Gegenstand der Erfindung sind lösungsmittelfrei herstellbare Beschichtungsmittel zur Herstellung verschmutzungsresistenter Beschichtungen enthaltend
a) mindestens ein filmbildendes Polymerisat von einem oder mehreren Monomeren aus der Gruppe umfassend Vinylester, (Meth)-acrylsäureester, Vinylaromaten, Olefine, 1,3-Diene und Vinylhalogenide und gegebenenfalls weiteren damit copolymerisierbaren Monomeren, in Form dessen wässriger Polymerdispersion oder in Wasser redispergierbaren Polymerpulvers,
b) ein oder mehrere **Photoinitiatoren und gegebenenfalls Fungizide,**
c) mindestens ein Pigment,
d) ein oder mehrere Füllstoffe, sowie gegebenenfalls
e) weitere Zusatzstoffe,
dadurch gekennzeichnet, dass
die Verbindungen b) umfassend Photoinitiatoren und **gegebenenfalls** Fungizide in mit Cyclodextrin oder dessen Derivaten komplexierter Form vorliegen.

Unter lösungsmittelfrei herstellbar ist dabei zu verstehen, dass die Zugabe von Photoinitiator und **gegebenenfalls** Fungizid ohne Zusatz von Lösungsmittel erfolgen kann und damit lösungsmittelfreie bzw. emissionsarme Beschichtungsmittel zugänglich werden, deren Anteil an flüchtigen, nichtwässrigen Bestandteilen kleiner 1 Gew.-% beträgt, bezogen auf das Gesamtgewicht der Beschichtungsmittel-Zusammensetzung.

Geeignete Vinylester sind solche von Carbonsäuren mit 1 bis 12 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat.

Geeignete Monomeren aus der Gruppe Acrylsäureester oder Methacrylsäureester sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0.1 bis 5 Gew.-%, bezogen auf das Gesamtgewicht des Monomergemisches, Hilfsmonomere copolymerisiert werden. Bevorzugt werden 0.5 bis 2.5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder - methacrylat sowie Verbindungen wie Diacetonacrylamid und Acetylacetoxyethylacrylat oder -methacrylat.

Die Monomerauswahl bzw. die Auswahl der Gewichtsanteile der Comonomere erfolgt dabei so, daß im allgemeinen eine Glasübergangstemperatur Tg von -30°C bis +40°C, vorzugsweise -10°C bis +25°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Bevorzugt werden Homo- oder Mischpolymerisate, welche ein oder mehrere Monomere aus der Gruppe Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten. Besonders bevorzugt werden Mischungen mit Vinylacetat und Ethylen; mit Vinylacetat, Ethylen und einem Vinylester von α-verzweigten Monocarbonsäuren mit 9 bis 11 C-Atomen; mit n-Butylacrylat und 2-Ethylhexylacrylat und/oder Methylmethacrylat; mit Styrol und einem oder mehreren Monomeren aus der Gruppe Methylacrylat, Ethylacrylat, Propylacrylat, n-Butylacrylat, 2-Ethylhexylacrylat; mit Vinylacetat und einem oder mehreren Monomeren aus der Gruppe Methylacrylat, Ethylacrylat, Propylacrylat, n-Butylacrylat, 2-Ethylhexylacrylat und gegebenenfalls Ethylen; mit 1,3-Butadien und Styrol und/oder Methylmethacrylat sowie gegebenenfalls weiteren Acrylsäureestern; wobei die genannten Gemische gegebenenfalls noch ein oder mehrere der obengenannten Hilfsmonomere enthalten können.

Am meisten bevorzugt werden Polymerisate der obengenannten Zusammensetzungen, welche noch 0.1 bis 5 Gew.-%, bezogen auf das Gesamtgewicht des Polymerisats, Monomereinheiten enthalten, welche sich ableiten von einem oder mehreren Comonomeren aus der Gruppe umfassend ethylenisch ungesättigte Mono- und Dicarbonsäuren wie Acrylsäure, Methacrylsäure, Fumarsäure und Maleinsäure; ethylenisch ungesättigte Carbonsäureamide und -nitrile wie Acrylamid und Acrylnitril; Monoester der Fumarsäure und Maleinsäure, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure.

Die Herstellung der Polymerisate a) erfolgt nach dem Emulsionspolymerisationsverfahren oder nach dem Suspensionspolymerisationsverfahren in Gegenwart von Schutzkolloiden und/oder Emulgatoren, vorzugsweise nach dem Emulsionspolymerisationsverfahren, wobei die Polymerisationstemperatur im allgemeinen 40°C bis 100°C, vorzugsweise 60°C bis 90°C beträgt, und bei der Copolymerisation von gasförmigen Comonomeren wie Ethylen auch unter Druck, im allgemeinen zwischen 5 bar und 100 bar, gearbeitet werden kann. Die Initiierung der Polymerisation erfolgt mit den für die Emulsionspolymerisation bzw. Suspensionspolymerisation gebrauchlichen wasserlöslichen bzw. monomerlöslichen Initiatoren oder Redox-Initiator-Kombinationen. Beispiele für wasserlosliche Initiatoren sind die Natriumpersulfat, Wasserstoffperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im allgemeinen in einer Menge von 0.01 bis 0.5 Gew.-%, bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind beispielsweise Natriumsulfit, Natriumhydroxymethansulfinat und Ascorbinsäure. Die Reduktionsmittelmenge beträgt vorzugsweise 0.01 bis 0.5 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Geeignete Schutzkolloide sind teilverseifte oder vollverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)-acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden teilverseifte oder vollverseifte Polyvinylalkohole. Besonders bevorzugt sind teilverseifte Polyvinylalkohole mit einem Hydrolysegrad von 80 bis 95 Mol% und einer Höpplerviskosität in 4 %-iger wässriger Lösung von 1 bis 30 mPas (Methode nach Höppler bei 20°C, DIN 53015).

Geeignete Emulgatoren, die in 0.5 bis 10 Gew.-% bezogen auf die Monomermenge, eingesetzt werden können sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem erfindungsgemäßen Verfahren erhältlichen wässrigen Dispersionen haben einen Feststoffgehalt von 30 bis 75 Gew.-%, vorzugsweise von 50 bis 60 Gew.-%. Zur Herstellung der in Wasser redispergierbaren Polymerpulver werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Verdüsungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Geeignete Verdüsungshilfen sind beispielsweise die bereits genannten Schutzkolloide. Bevorzugt werden keine weiteren Schutzkolloide als Polyvinylalkohole als Verdüsungshilfe eingesetzt. Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 um.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Geeignete Photoinitiatoren b) sind solche welche bei Bestrahlung mit Sonnenlicht die Vernetzung der Polymerisate a) bewirken. Es handelt sich dabei um handelsübliche Verbindungen wie Benzophenon und substituierte Benzophenone, Acetophenon und substituierte Acetophenone, wobei die Derivate im allgemeinen einfach oder mehrfach mit Substituenten aus der Gruppe umfassend Hydroxy-Rest, Amino-Rest, Nitro-Rest, Chlor-Rest, Carboxyl-Rest, Hydroxyalkyl-Rest wie Hydroxymethyl-Rest, C₁- bis C₄₋Alkyl-Rest wie Methyl-Rest, C₁- bis C₄-Alkoxy-Rest wie Methoxy-Rest substituiert ist. Bevorzugt werden Benzophenon und Benzophenon-Derivate sowie Acetophenon-Derivate. Besonders bevorzugt solche Benzophenon-Derivate in denen nur ein Phenylring substituiert ist, und insbesondere solche in denen nur ein Phenylring in 4-Stellung substituiert ist. Beispiele für bevorzugte Photoinitiatoren sind 1,1-Dimethyl-1-hydroxy-Acetophenon, 1,1-Dimethoxy-1-phenyl-Acetophenon, Benzophenon, 4-Hydroxy-Benzophenon, 4-Amino- Benzophenon, 4-Nitro-Benzophenon, 4-Chlor-Benzophenon, 4-Carboxy-Benzophenon, 4-Hydroxymethyl-Benzophenon, 4-Methyl-Benzophenon, 4,4'-Dimethyl-Benzophenon, 4,4'-Dichlor-Benzophenon. Im allgemeinen werden die Photoinitiatoren in einer Menge von 0.05 bis 5.0 Gew.-%, vorzugsweise 0.1 bis 2.0 Gew.-%, jeweils bezogen auf den Polymerisatanteil a) eingesetzt.

Geeignete Fungizide b) sind im Handel erhältlich. Gegen den Befall von Bakterien, Hefen und Pilzen werden üblicherweise Wirkstoffe aus der Konservierungsmittelklasse der Isothiazolinone eingesetzt. Beispiele hierfür sind n-Octylisothiazolinon, DiChlor-n-Octylisothiazolinon, Chlormethylisothiazolinon, Methylisothiazolinon, Benzisothiazolinon. Des weiteren geeignet als Fungizide sind Benzimidazolderivate, z.B. 2-(Methoxy-carbonylamino)-benzimidazol, 2,4-Diamino-6-methylthio-1,3,5-triazinDerivate, o-Phenylphenol, substituierte Harnstoffe und Phenylharnstoffe, Phthalimid-Derivate, z.B. N-(Trichlormethylthio)-phthalimid, Iodcarbamat, Pyrethroide,Chloracetamid, Natriumborat, Methylisopropylphenol, Bariummetaborat, Dithiocarbaminat. Üblicherweise werden die Fungizide in einer Menge von 0.001 bis 0.2 Gew.-%, bezogen auf das Gesamtgewicht der Beschichtungsmittel-Zusammensetzung eingesetzt.

Geeignete Pigmente c) sind dem Fachmann bekannt. Es können sowohl anorganische Pigmente als auch organische Pigmente eingesetzt werden. Beispiele für anorganische Weisspigmente sind Titandioxid, Zinkoxid, Zinksulfid, Bleicarbonat und Bariumsulfat. Beispiele für anorganische Farbpigmente sind Eisenoxid-Gelb, - Rot und -Schwarz, Ruß, Graphit, Chrom- und Cadmium-Gelb oder - Orange, Molybdat-Orange und -Rot, Kobalt-, Eisen- und Ultramarinblau, Chromoxidgrün und Mischphasengrünpigmente mit Spinellstruktur und Manganviolett. Geeignete organische Farbpigmente sind Azo-, Antrachinon-, Chinacridon-, Phtalocyanin-, Perylen- und Indigo-Farbstoffe. Der Pigmentanteil ist abhängig von der Deckkraft des Pigments und der Farbtiefe und beträgt im allgemeinen 1 bis 30 Gew.-%, bezogen auf das Gesamtgewicht der Beschichtungsmittel-Zusammensetzung.

Beispiele für einsetzbare Füllstoffe d) sind Carbonate wie Calciumcarbonat in Form von Dolomit, Calcit und Kreide. Weitere Beispiele sind Silikate, wie Magnesiumsilikat in Form von Talkum, oder Aluminiumsilikate wie Kaolin, Glimmer, Lehm und Tone; Quarzmehl, Quarzsand, hochdisperse Kieselsäure, Feldspat, Schwerspat und Leichtspat. Geeignet sind auch Faserfüllstoffe naturlichen (Cellulosefaser) oder synthetischen (Polyethylen, Polyacrylnitril) Ursprungs. In der Praxis werden häufig Gemische verschiedener Füllstoffe engesetzt. Beispielsweise Gemische von Füllstoffen unterschiedlicher Teilchengröße oder Gemische von carbonatischen und silikatischen Füllstoffen. Kunststoffputze enthalten im allgemeinen grobkörnigere Füllstoffe als Dispersionsfarben. Die Körnung liegt dabei oftmals zwischen 0.2 und 5.0 mm. Der Füllstoffanteil beträgt im allgemeinen 5 bis 80 Gew.-%, bezogen auf das Gesamtgewicht der Beschichtungsmittel-Zusammensetzung.

Im allgemeinen wird der Pigment- und Füllstoffanteil so bemessen, dass eine Pigmentvolumenkonzentration PVK von ≥ 10 % resultiert. Bei Aussenfarben beträgt die PVK vorzugsweise 25 bis 70 %, und errechnet sich mit PVK (%) = (V_{P+F} x 100) / (V_{P+F} + V_{B}) mit V_{P+F} = Volumen Pigment + Füllstoff und V_{B} = Volumen Bindemittel.

Zu den Zusatzstoffen e) zählen anorganische Bindemittel wie Zement, Kalk und Gips. Weitere Zusatzstoffe e) sind Verdickungsmittel, beispielsweise Polysaccharide wie Celluloseether und modifizierte Celluloseether, Stärkeether, Guar Gum oder Xanthan Gum, Schichtsilikate, Polycarbonsäuren wie Polyacrylsäure und deren Teilester, Polyvinylalkohole welche gegebenenfalls acetalisiert und/oder hydrophob modifiziert sein können, Casein und assoziativ wirkende Verdicker, oder Bentonit als Beispiel für ein anorganisches Verdickungsmittel. Es können auch Gemische der genannten Verdickungsmittel eingesetzt werden. Bevorzugt werden die Celluloseether, die modifizierten Celluloseether, die Polyvinylalkohole welche gegebenenfalls acetalisiert und/oder hydrophob modifiziert sein können, sowie deren Gemische. Vorzugsweise werden 0.05 bis 2.5 Gew.-%, besonders bevorzugt 0.05 bis 0.5 Gew.-% Verdickungsmittel eingesetzt.

Beispiele für weitere Zusatzstoffe e) sind Netzmittel in Anteilen von im allgemeinen 0.1 bis 0.5 Gew.-%, bezogen auf das Gesamtgewicht der Rezeptur. Beispiele hierfür sind Natrium- und Kaliumpolyphosphate, Polyacrylsäuren und deren Salze. Weitere Zusatzstoffe sind Entschäumer und Gefrierschutzmittel.

Bei der erfindungsgemässen Beschichtungsmittel-Zusammensetzung liegen der Photoinitiator b) und **gegebenenfalls** das Fungizid b) in mit Cyclodextrin komplexierter Form vor. Geeignete Cyclodextrine sind α-Cyclodextrin (Cyclohexaamylose), β-Cyclodextrin (Cycloheptaamylose), γ-Cyclodextrin (Cyclooctaamylose) sowie jeweils deren Derivate oder Gemische der genannten Cyclodextrine und Cyclodextrinderivate. Beispiele für Cyclodextrin-Derivate sind aus der Gruppe der Cyclodextrin-Alkylether die Methylether, Ethylether oder Propylether von α-, β-, und γ-Cyclodextrin. Beispiele aus der Gruppe der Hydroxyalkylether sind Hydroxyethyl-, Hydroxypropyl- und Dihydroxypropyl-Ether von α-, β- und γ-Cyclodextrin. Beispiele aus der Gruppe der Carboxyalkyl-Ether sind Carboxymethyl- und Carboxypropylether von α-, β-, und γ-Cyclodextrin und deren Alkalisalze wie der Natrium-Carboxymethylether. Geeignete Cyclodextrinether sind auch Mischether von α-, β-, und γ-Cyclodextrin, welche mindestens zwei unterschiedliche Gruppen der genannten Alkylether-, Hydroxyalkylether- oder Carboxalkylether-Gruppen aufweisen. Beispiele für Cyclodextrinester sind die Essigsäure- (Acetyl-Cyclodextrine), Propionsäure-Ester (Propionyl-Cyclodextrine) von α-, β-, und γ--Cyclodextrin. Beispiele für substituierte Cyclodextrin-Ether oder Cyclodextrin-Ester sind 2-Aminoethyl- oder 2-Chloracetyl-Cyclodextrine. Bevorzugte Cyclodextrin-Derivate sind die Cyclodextrin-Alkylether und -Hydroxyalkylether von α-, β-, und γ-Cyclodextrin, insbesondere Cyclodextrin-Methylether. Am meisten bevorzugt werden α-, β-, und γ-Cyclodextrin.

Die Cyclodextrine sind im Handel erhältlich oder mittels bekannter Verfahren wie enzymatische Spaltung von Stärke mit Cyclodextringlykosyltransferasen (CGTasen) zugänglich. Derartige Verfahren sind beispielsweise in der DE-A 4324650 beschrieben. Die genannten Cyclodextrin-Derivate sind ebenfalls im Handel erhältlich oder mittels bekannter Verfahren zugänglich; Verfahren zur Herstellung sind beispielsweise in der EP-A 146841 (US-A 4582900) beschrieben.

Die Herstellung der Cyclodextrin-Komplexe mit den Komponenten b) erfolgt nach an sich üblichen Verfahren, wie z.B. in J. Sejtli, "Cyclodextrin Technology", Kluwer Academic Publishers, 1988, S. 86 ff beschrieben. So können beispielsweise die Cyclodextrin-Komplexe durch Rühren oder Schütteln von wässrigen Lösungen von Cyclodextrin(derivat) mit dem Photoinitiator bzw. Fungizid bei Temperaturen von 10°C bis 80°C hergestellt werden. Beim Rühren kommen dabei gängige Rührwerkzeuge oder Dispergatoren zum Einsatz. Bei einer weiteren Methode zur Herstellung der Komplexe werden die Cyclodextrin(derivat)e mit Wasser im Verhältnis von vorzugsweise 6 : 4 bis 9 : 1 zu einer Paste angeteigt und die Paste mit der Komponente b) bei 20°C bis 80 °C für 10 bis 200 Minuten geknetet. Die Paste kann im Vakuum getrocknet werden. Des Weiteren können das Cyclodextrin(derivat) und die Komponente b) in einem gemeinsamen organischem Lösungsmittel, wie beispielsweise C₁-C₆-Alkohole, C₃-C₆-Ketone, Ethylacetat, Methylacetat, Glykole gelöst werden. Das Lösungsmittel kann anschließend durch Trocknen, beispielsweise im Vakuum, entfernt werden. Hierdurch werden in der Regel Feststoffe erhalten, die in Wasser gelöst werden können.

Im allgemeinen beträgt der Anteil an Cyclodextrin(derivat) in den Komplexen (Mischungen) mit dem Photoinitiator und gegebenenfalls dem Fungizid von 1 bis 30 Gew.-%, vorzugsweise 2 bis 20 Gew.-%, jeweils bezogen auf das Gesamtgewicht aus Komponente b) und Cyclodextrin(derivat).

Zur Herstellung der Beschichtungsmittel wird das Polymerisat a) in Form einer Polymerdispersion oder eines Polymerpulver mit den weiteren Rezepturbestandteilen b) bis e) in geeigneten Mischern, vorzugsweise ohne Zusatz von nichtwässrigen, flüchtigen Lösungsmitteln, gemischt und homogenisiert. Das Polymerpulver kann gegebenenfalls auch in Form einer wässrigen Redispersion auf der Baustelle zugegeben werden. In vielen Fällen wird eine Trockenmischung hergestellt und das zur Verarbeitung erforderliche Wasser unmittelbar vor der Verarbeitung hinzugefügt. Bei der Herstellung von pastösen Massen wird häufig zunächst der Wasseranteil vorgelegt, die Dispersion zugegeben und abschliessend werden die Feststoffe eingerührt.

Die Beschichtungsmittel-Zusammensetzung eignet sich zur Verwendung in Dispersionsfarben, Dichtungsmassen oder Kunststoffputzen. Besonders bevorzugt ist die Anwendung im Aussenbereich, insbesondere auf mineralischen Untergründen.

Die nachfolgenden Beispiele dienen der weiteren Erläuterung der Erfindung:

Die Verschmutzungsneigung wurde an Beschichtungen der Zusammensetzung gemäß Tabelle 1 überprüft.

Die zu überprüfenden Exponate wurden in der Freibewitterung bei einem Stellwinkel von 60°C der Witterung (Richtung Süd) ausgesetzt und zeitabhängig beurteilt.

Als Messwert dient der nach ASTM D 3719-00 gemessene Verschmutzungsindex D_{c} = L*ₓ/L*ₒ, mit L*ₒ = Hellbezugswert der unbewitterten Probe, L*ₓ = Hellbezugswert der bewitterten Probe nach dem Bewitterungszeitraum x (x = 15 Monate).
Der Wertebereich für D_{c} liegt im allgemeinen zwischen 75 und 100. Der D_{c}-Wert ist dabei umso höher, je geringer die Verschmutzung ist.

Die Ergebnisse sind in Tabelle 2 zusammengefasst.

**Tabelle 1:**

| Komponente | Funktion | Menge [g] |
|---|---|---|
| Wasser | | 53.9 (62.9) |
| Na-Polyacrylat (40 %-ig) | Dispergiermittel | 2.0 |
| Biozid | Topfkonservierung | 2.0 |
| Schichtsilikat (5 %-ig) | Rheologisches Additiv | 15.0 |
| Cellulose-Ether (2 %-ig) | Rheologisches Additiv | 30.0 |
| Acrylat-Verdicker | Rheologisches Additiv | 1.0 |
| Lusolvan FBH | Verfilmungshilfsmittel | 3.0 |
| Cellulosefaser | Füllstoff | 5.0 |
| Faserfüllstoff | Füllstoff | 1.0 |
| Titandioxid | Pigment | 30.0 |
| Dispersion 50 %-ig | Bindemittel | 129.5 |
| Calciumcarbonat (50 µm) | Füllstoff | 225.0 |
| Calciumcarbonat (130 µm) | Füllstoff | 170.0 |
| Calciumcarbonat (1.8-2.5mm) | Füllstoff | 320.0 |
| Entschäumer | | 2.0 |
| Ammoniak | | 0.5 |
| siehe Beispiel | Photoinitiator | 10.0 (1.0) |
| siehe Beispiel | Fungizid | 0.1 |
| | | |
| Summe | | 1000 |

In den (Vergleichs)Beispielen 1 bis 5 wurde eine emulgatorstabilisierte, wässrige Dispersion eines Vinylacetat-EthylenCopolymers mit einer MFT von 7°C eingesetzt.
In an sich bekannter Weise wurde diese Dispersion durch Emulsionspolymerisation von Vinylacetat und Ethylen im Gewichtsverhältnis 90:10 unter Verwendung von 1.5 Gew.-% eines ethoxylierten (50 EO-Einheiten) Fettalkoholes bei 55°C und 10 bar hergestellt. Als Initiator wurde eine Kombination von 0.2 Gew.-% t-Butylhydroperoxid und 0.3 Gew.-% Natriumhydroxymethansulfinat eingesetzt.

### Vergleichsbeispiel 1:

Als Photoinitiator wurde 1,1-Dimethyl-1-hydroxy-Acetophenon (Darocur® 1173) eingesetzt (28 %-ige Lösung in Ethanol); 1 Gew.-% Photoinitiator auf Formulierung.

### Beispiel 2:

Als Photoinitiator wurde ein Komplex aus Darocur® 1173 und Beta-Cyclodextrin (10 Gew.-% bezogen auf Gesamtgewicht von Cyclodextrin und Photoinitiator) eingesetzt; 1 Gew.-% Photoinitiator auf Formulierung.

### Vergleichsbeispiel 3:

Es wurde ohne Photoinitiator gearbeitet.

### Vergleichsbeispiel 4:

Als Photoinitiator wurde 1,1-Dimethoxy-l-phenyl-Acetophenon (Irgacure® 651) eingesetzt (28 %-ige Lösung in Methanol); 1 Gew.-% Photoinitiator auf Formulierung.

### Beispiel 5:

Als Photoinitiator wurde ein Komplex aus Irgacure® 651 und Beta-Cyclodextrin (2 Gew.-% bezogen auf das Gesamtgewicht von Cyclodextrin und Photoinitiator) eingesetzt; 0.1 Gew.-% Photoinitiator auf Formulierung.

**Tabelle 2:**

| Beispiel | | Verschmutzungsindex D_{c} nach 15 Monaten Bewitterung |
|---|---|---|
| Vgl.bsp. | 1 | 86 |
| Bsp. | 2 | 88 |
| Vgl.bsp. | 3 | 85 |
| Vgl.bsp. | 4 | 87 |
| Bsp. | 5 | 90 |

Die Beispiele belegen die geringere Anschmutzungsneigung bei erfindungsgemäßer Vorgehensweise.

## Patentansprüche

1. Beschichtungsmittel zur Herstellung verschmutzungsresistenter Beschichtungen enthaltend
a) mindestens ein filmbildendes Polymerisat von einem oder mehreren Monomeren aus der Gruppe umfassend Vinylester, (Meth)acrylsäureester, Vinylaromaten, Olefine, 1,3-Diene und Vinylhalogenide und gegebenenfalls weiteren damit copolymerisierbaren Monomeren, in Form dessen wässriger Polymerdispersion oder in Wasser redispergierbaren Polymerpulvers,
b) **ein oder mehrere Photoinitiatoren und gegebenenfalls Fungizide,**
c) mindestens ein Pigment,
d) ein oder mehrere Füllstoffe, sowie gegebenenfalls
e) weitere Zusatzstoffe,
**dadurch gekennzeichnet, dass**
die Verbindungen b) umfassend Photoinitiatoren und **gegebenenfalls** Fungizide in mit Cyclodextrin oder dessen Derivaten komplexierter Form vorliegen.

2. Beschichtungsmittel nach Anspruch 1, welches als filmbildendes Polymerisat a) ein oder mehrere Homo- oder Mischpolymerisate enthält, welche ein oder mehrere Monomere aus der Gruppe Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten.

3. Beschichtungsmittel nach Anspruch 1 oder 2, welches als filmbildendes Polymerisat a) ein oder mehrere Homo- oder Mischpolymerisate enthält, die noch 0.1 bis 5 Gew.-%, bezogen auf das Gesamtgewicht des Polymerisats, Monomereinheiten enthalten, welche sich ableiten von einem oder mehreren Comonomeren aus der Gruppe umfassend ethylenisch ungesättigte Mono- und Dicarbonsäuren, ethylenisch ungesättigte Carbonsäureamide und -nitrile, Monoester der Fumarsäure und Maleinsäure, sowie Maleinsäureanhydrid, ethylenisch ungesättigte Sulfonsäuren und deren Salze.

4. Beschichtungsmittel nach Anspruch 1 bis 3, welches als Photoinitiator b) 0.05 bis 5.0 Gew.-%, bezogen auf den Polymerisatanteil a), ein oder mehrere aus der Gruppe enthält, umfassend Benzophenon und substituierte Benzophenonderivate, Acetophenon und substituierte Acetophenonderivate, wobei die Derivate einfach oder mehrfach mit Substituenten aus der Gruppe umfassend Hydroxy-Rest, Amino-Rest, Nitro-Rest, Chlor-Rest, Carboxyl-Rest, Hydroxyalkyl-Rest wie Hydroxymethyl-Rest, C₁- bis C₄-Alkyl-Rest wie Methyl-Rest, C₁- bis C₄-Alkoxy-Rest wie Methoxy-Rest substituiert sind.

5. Beschichtungsmittel nach Anspruch 1 bis 4, welches als Fungizid b) 0.001 bis 0.2 Gew.-%, bezogen auf das Gesamtgewicht der Beschichtungsmittel-Zusammensetzung, ein oder mehrere Wirkstoffe aus der Konservierungsmittelklasse der Isothiazolinone enthält.

6. Beschichtungsmittel nach Anspruch 1 bis 5, bei dem Pigment- und Füllstoffanteil so bemessen wird, dass eine Pigmentvolumenkonzentration PVK von ≥ 10 % resultiert.

7. Beschichtungsmittel nach Anspruch 1 bis 6, bei dem der Photoinitiator und/oder das Fungizid in Komplexen mit α-Cyclodextrin, β-Cyclodextrin, γ-Cyclodextrin, jeweils deren Derivate oder Gemischen der genannten Cyclodextrine und Cyclodextrinderivate vorliegen.

8. Verfahren zur Herstellung der Beschichtungsmittel nach Anspruch 1 bis 7, **dadurch gekennzeichnet, dass** das Polymerisat a) in Form einer Polymerdispersion oder eines Polymerpulver mit den weiteren Rezepturbestandteilen b) bis e) in geeigneten Mischern, ohne Zusatz von nichtwässrigen, flüchtigen Lösungsmitteln, gemischt und homogenisiert wird.

9. Verwendung der Beschichtungsmittel nach Anspruch 1 bis 7 in Dispersionsfarben, Dichtungsmassen oder Kunststoffputzen.

10. Verwendung der Beschichtungsmittel nach Anspruch 1 bis 7 in Dispersionsfarben, Dichtungsmassen oder Kunststoffputzen im Aussenbereich.

## Claims

1. Coating compositions for producing soiling-resistant coatings, comprising
a) at least one film-forming polymer of one or more monomers from the group consisting of vinyl esters, (meth)acrylates, vinylaromatics, olefins, 1,3-dienes, and vinyl halides, and, if desired, further monomers copolymerizable therewith, in the form of its aqueous dispersion or water-redispersible powder,
b) one or more photoinitiators and, if desired, fungicides,
c) at least one pigment,
d) one or more fillers, and, if desired,
e) further additives,
**characterized in that**
the compounds b) comprising photoinitiators and, if desired, fungicides are in the form of complexes with cyclodextrin or its derivatives.

2. Coating composition according to claim 1, comprising as film-forming polymer a) one or more homopolymers or copolymers containing one or more monomers from the group consisting of vinyl acetate, vinyl esters of α-branched monocarboxylic acids having from 9 to 11 carbon atoms, vinyl chloride, ethylene, methyl acrylate, methyl methacrylate, ethyl acrylate, ethyl methacrylate, propyl acrylate, propyl methacrylate, n-butyl acrylate, n-butyl methacrylate, 2-ethylhexyl acrylate, and styrene.

3. Coating composition according to claim 1 or 2, comprising as film-forming polymer a) one or more homopolymers or copolymers which also contain from 0.1 to 5% by weight, based on the overall weight of the polymer, of monomer units deriving from one or more comonomers from the group consisting of ethylenically unsaturated monocarboxylic and dicarboxylic acids, ethylenically unsaturated carboxamides and carbonitriles, monoesters of fumaric acid and maleic acid, and also maleic anhydride, ethylenically unsaturated sulfonic acids and their salts.

4. Coating composition according to any of claims 1 to 3, comprising as photoinitiator b) from 0.05 to 5.0% by weight, based on the polymer fraction a), of one or more from the group consisting of benzophenone and substituted benzophenone derivatives, acetophenone and substituted acetophenone derivatives, the derivatives generally being substituted one or more times by substituents from the group consisting of hydroxyl, amino, nitro, chloro, carboxyl, hydroxyalkyl such as hydroxymethyl, C₁ to C₄ alkyl such as methyl, and C₁ to C₄ alkoxy such as methoxy radicals.

5. Coating composition according to any of claims 1 to 4, comprising as fungicide b) from 0.001 to 0.2% by weight, based on the overall weight of the coating composition, of one or more active substances from the isothiazolinones preservative class.

6. Coating composition according to any of claims 1 to 5, wherein the pigment plus filler fraction is calculated so as to give a pigment volume concentration, PVC, of ≥ 10%.

7. Coating composition according to any of claims 1 to 6, wherein the photoinitiator and/or fungicide are present in the form of complexes with α-cyclodextrin, β-cyclodextrin, γ-cyclodextrin, their derivatives, or mixtures of said cyclodextrins and cyclodextrin derivatives.

8. Process for preparing the coating compositions according to any of claims 1 to 7, **characterized in that** it comprises mixing the polymer a) in the form of a dispersion or powder with the other formula ingredients b) to e) in suitable mixers, without adding nonaqueous volatile solvents, and homogenizing the mixture.

9. Use of the coating compositions according to any of claims 1 to 7 in emulsion paints, sealing compounds or polymer plasters.

10. Use of the coating compositions according to any of claims 1 to 7 in emulsion paints, sealing compounds or polymer plasters in the exterior sector.

## Revendications

1. Agent de revêtement pour la préparation de revêtements anti-salissures, contenant
a) au moins un polymère filmogène d'un ou plusieurs monomères du groupe formé par des esters vinyliques, des esters d'acide (méth)acrylique, des vinylaromatiques, des oléfines, des 1,3-diènes et des halogénures de vinyle, et le cas échéant d'autres monomères copolymérisables avec eux, sous la forme de sa dispersion aqueuse de polymère ou de poudre de polymère redispersible dans l'eau,
b) un ou plusieurs photoinitiateurs et le cas échéant un ou plusieurs fongicides,
c) au moins un pigment,
d) une ou plusieurs charges, et le cas échéant
e) d'autres additifs,
**caractérisé en ce que** les composés b) comprenant des photoinitiateurs et le cas échéant des fongicides se trouvent sous forme complexée avec de la cyclodextrine ou ses dérivés.

2. Agent de revêtement suivant la revendication 1, contenant en tant que polymère filmogène a) un ou plusieurs homo- ou copolymères qui contiennent un ou plusieurs monomères du groupe formé par l'acétate de vinyle, des esters vinyliques d'acides monocarboxyliques α-ramifiés comportant de 9 à 11 atomes de C, le chlorure de vinyle, l'éthylène, l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate de 2-éthylhexyle, le styrène.

3. Agent de revêtement suivant la revendication 1 ou 2, contenant en tant que polymère filmogène a) un ou plusieurs homo- ou copolymères, qui contiennent encore de 0,1 à 5% en poids, par rapport au poids total du polymère, d'unités monomères dérivées d'un ou plusieurs comonomères du groupe comprenant des acides mono- et dicarboxyliques éthyléniquement insaturés, d'amides et de nitriles d'acides carboxyliques éthyléniquement insaturés, de monoesters d'acide fumarique et d'acide maléique, ainsi que d'anhydride maléique, d'acides sulfoniques éthyléniquement insaturés et de leurs sels.

4. Agent de revêtement suivant les revendications 1 à 3, contenant en tant que photoinitiateur b) de 0,05 à 5,0% en poids, par rapport à la fraction de polymère a), d'un ou plusieurs photoinitiateurs du groupe comprenant la benzophénone et des dérivés de benzophénone substitués, l'acétophénone et des dérivés d'acétophénone substitués, les dérivés étant substitués une ou plusieurs fois par des substituants du groupe comprenant un radical hydroxy, un radical amino, un radical nitro, un radical chloro, un radical carboxyle, un radical hydroxyalkyle comme le radical hydroxyméthyle, un radical alkyle en C₁ à C₄ comme le radical méthyle, un radical alcoxy en C₁ à C₄ comme le radical méthoxy.

5. Agent de revêtement suivant les revendications 1 à 4, contenant en tant que fongicide b) de 0,001 à 0,2% en poids, par rapport au poids total de la composition d'agent de revêtement, d'un ou plusieurs agents actifs de la classe des agents conservateurs des isothiazolinones.

6. Agent de revêtement suivant les revendications 1 à 5, dans lequel la fraction de pigment et de charge est dimensionnée de manière à ce qu'il en résulte une concentration volumique de pigment CVP ≥10%.

7. Agent de revêtement suivant les revendications 1 à 6 dans lequel le photoinitiateur et/ou le fongicide se trouvent en tant que complexes avec de l'α-cyclodextrine, de la β-cyclodextrine, de la γ-cyclodextrine, respectivement leurs dérivés ou des mélanges desdites cyclodextrines et de dérivés de cyclodextrines.

8. Procédé de préparation de l'agent de revêtement suivant les revendications 1 à 7, **caractérisé en ce que** le polymère a), sous la forme d'une dispersion de polymère ou d'une poudre de polymère, est mélangé et homogénéisé avec les autres constituants de la formulation b) à e) dans des mélangeurs appropriés, sans addition de solvants volatils non aqueux.

9. Utilisation de l'agent de revêtement suivant les revendications 1 à 7 dans des peintures à dispersion, des masses d'étanchéité ou des enduits synthétiques.

10. Utilisation de l'agent de revêtement suivant les revendications 1 à 7 dans des peintures à dispersion, des masses d'étanchéité ou des enduits synthétiques dans des applications en extérieur.
